# EUROPÄISCHE PATENTANMELDUNG

(11) **EP 1 806 271 A2**
(43) Veröffentlichungstag der Anmeldung: **11.07.2007**
(21) Anmeldenummer: 06025924.9
(22) Anmeldetag: 14.12.2006
(51) Int. Cl.: B62D 21/15, B62D 25/20

(54) **Kraftfahrzeug mit wenigstens einem längsseitig an seiner Karosserie verlaufenden, verstärkten Türschweller**

(30) Priorität: 07.01.2006 DE 102006001061
(71) Anmelder: GM Global Technology Operations, Inc., Detroit, MI 48265-3000 (US)
(72) Erfinder: Klimek, Stanislaw, 60433 Frankfurt/Main (DE); Teske, Lothar, 63743 Aschaffenburg (DE)
(74) Vertreter: Strauss, Peter

(57) **Zusammenfassung**

Kraftfahrzeug mit wenigstens einem längsseitig an seiner Karosserie (10) verlaufenden, verstärkten Türschweller (20, 20'), dadurch gekennzeichnet, dass der Schweller (20, 20') über seine Länge hinweg Abschnitte (21, 22, 23) unterschiedlicher Steifigkeit aufweist, die in einem vorderen und hinteren Abschnitt (21, 23) des Schwellers (20, 20') niedriger ist als in einem mittleren Abschnitt (22) des Schwellers (20, 20').

## Beschreibung

Die Erfindung betrifft ein Kraftfahrzeug nach Anspruch 1.

In Anbetracht neuer Anforderungen zur Erfüllung der Side-Pole-Tests (Seitenpfahltest), zB hinsichtlich einer Erhöhung der Geschwindigkeit, der Auswertung und Beurteilung von Dummywerten nach dem Test usw, müssen zusätzliche Verstärkungen im Bodenbereich der Karosserie und im Türschweller eines Fahrzeugs in Betracht gezogen werden.

Zwar zeigt eine - noch nicht veröffentlichte - Patentanmeldung des Anmelders schon entsprechende Querstrukturen einer Karosserie, die einen schnellen Abbau seitlich eingeleiteter Lasten erlauben. Die Versteifung eines kompletten Schwellers zieht allerdings eine erhebliche Erhöhung des Fahrzeuggewichts nach sich, wobei die Eindringtiefen (Intrusionen) des Pfahls nicht notwendigerweise reduziert werden.

Ausgangszustand für die im Folgenden vorzustellende Erfindung war eine Konstruktion, die nach Side-Pole-Test zwischen 450 bis 500 mm Intrusion aufwies, weil Schweller und Bodenkonstruktion nicht genug Widerstand gegen eine starre Barriere bieten. Nach der Aussteifung des Bodenbereichs der Karosserie mit einer zusätzlichen Querstruktur im Bereich des Lastangriffs - von der Mitte der Vordertür bis hinter eine B-Säule - werden die Intrusionen an der B-Säule und in der Vordertür zwar reduziert. Die maximalen Intrusionen treten aber in der Vordertür auf, dh im Bereich des Dummys.

Es ist Aufgabe der vorliegenden Erfindung, ein gattungsgemäßes Fahrzeug anzugeben, dessen Türschweller einen erhöhten Widerstand gegen seitlich einwirkende Pfahlkräfte bietet, der keine wesentliche Gewichtserhöhung des Fahrzeugs nach sich zieht und der einfach und kostengünstig zu realisieren ist.

Diese Aufgabe wird durch ein Fahrzeug gelöst, dessen Schweller über seine Länge hinweg Abschnitte unterschiedlicher Steifigkeit aufweist, die in einem vorderen und hinteren Abschnitt des Schwellers niedriger ist als in einem mittleren Abschnitt des Schwellers.

Ein wesentlicher Punkt der vorliegenden Erfindung besteht dabei darin, dass mit der erfindungsgemäßen Steifigkeitsverteilung ein Schweller entsteht, der sich im Bereich des Vordersitzes unter keinen Umständen deformieren lässt, da der Schweller dort erheblich stärker ausgelegt ist als an seinen beidseitigen Enden. Durch die höhere Steifigkeit im mittleren Abschnitt bewirkt dabei eine Rotation des Schwellers bei der Lasteinleitung. Die wesentlichen Deformationen entstehen damit, abhängig vom jeweiligen Abstand des Lastangriffspunktes, in dem vorderen bzw hinteren Abschnitt. Im Side-Pole-Test wird eine Deformationsstelle erzeugt, die kurz hinter der B-Säule liegt, also an einer Stelle, wo die maximalen Intrusionen keinerlei Auswirkungen auf die Insassen haben. Dabei sind die Intrusionen an der Fahrertür sogar niedriger als in der B-Säule.

Bevorzugte Weiterbildungen des Fahrzeugs sind in den folgenden Unteransprüchen 2 bis 15 angegeben.

Danach ist in einer vorteilhaften Ausführungsform vorgesehen, dass der mittlere Abschnitt des Türschwellers angrenzend zu einer Querversteifung der Karosserie gebildet ist, die sich in deren Bodenbereich erstreckt. Die Rotationsbewegung dieses Abschnitts wird durch die Querversteifung abgebremst, in der zumindest ein Teil der eingeleiteten Pfahllast durch Deformation abgebaut wird. Damit wird die Intrusion des verschwenkten Endes des mittleren Abschnitts in einen Kabinenbereich des Fahrzeugs verringert.

Grundsätzlich kann der mittlere Abschnitt des Türschwellers zB durch eine höhere Blech- oder Kunststoffdicke gegen seitlich einwirkende Kräfte verstärkt sein. Es ist aber von Vorteil, wenn der Schweller wenigstens ein Versteifungselement aufnimmt, der an einer Innenstruktur der Schweller gehalten ist. Durch die Aufnahme des Versteifungselements im Innern des Schwellers, das zB mit dessen Innenwand verbunden ist, kann die Außenkontur des Schwellers unverändert beibehalten werden, wodurch keine Platzprobleme in angrenzenden Bauräumen auftreten.

Eine bevorzugte Innenstruktur des Türschwellers wird von einem Steg gebildet, der den Schweller in einen längsgerichteten Innen- und Außentunnel teilt. Zum einen bietet der Steg in jedem Tunnel eine, dh insgesamt gleich zwei Fixierungsflächen für Versteifungselemente, zum anderen wird der Schweller durch den Steg selbst zusätzlich verstärkt. Der Steg kann - abhängig von material- und strukturspezifischen Eigenschaften eines daran befestigten Versteifungselements zB vertikal oder horizontal im Querschnitt des Schwellers ausgerichtet sein; in jedem Fall aber so, dass die Kombination aus Steg und Versteifungselement einen optimalen Schutz gegen einen Seitenaufprall leistet.

Da der Türschweller üblicherweise aus zwei seitlichen Halbblechschalen zusammengefügt wird, ist es aus fertigungstechnischen Gründen bevorzugt, wenn der Steg vertikal im Querschnitt des Schwellers ausgerichtet ist. In diesem Fall können vertikale Enden des Stegs besonders einfach zwischen den Halbschalen angeordnet und mit diesen zusammen zB verschweißt, verklebt, verschraubt oder auch vernietet werden.

In der Folge werden vier alternative Weiterbildungen eines Versteifungselements angegeben, von denen jede für sich besondere Vorteile aufweist. Die alternativen Ausführungsformen lassen sich aber auch untereinander kombinieren, wenn der Schweller mehr als nur ein Versteifungselement vorsieht. Die Auswahl der Verstärkungen für den mittleren Abschnitt des Türschwellers ist dabei bedarfsabhängig zu sehen.

In einer ersten Ausführungsform eines Versteifungselements ist es vorgesehen, dass das Element über seine gesamte Länge hinweg Verprägungen aufweist, und der mittlere Abschnitt des Türschwellers durch eine erhöhte Dicke des Elements verstärkt ist. Ein solches Versteifungselement kann besonders kostengünstig als gewalztes Profil hergestellt werden.

In einer zweiten Ausführungsform eines Versteifungselements ist es vorgesehen, dass das Element über seine gesamte Länge hinweg als U-Profil ausgelegt ist, und der mittlere Abschnitt des Türschwellers durch zusätzliche Verprägungen des Elements verstärkt ist. Auch ein solches Versteifungselement kann kostengünstig als gewalztes Profil hergestellt werden. Da beide Schenkel des U-Profils mit Verprägungen versehen werden können, weist ein solches Element zudem eine im Vergleich zur ersten Ausführungsform höhere Stabilität auf.

In beiden vorstehend genannten Fällen kann eine weiter erhöhte Stabilität des Versteifungselements dadurch erzielt werden, wenn die Verprägungen an einem Versteifungselement quer zur Fahrzeuglängsachse verlaufende Wellen bilden. Diese setzen einer seitlich einwirkenden Kraft einen besonders großen Widerstand entgegen.

In einer dritten Ausführungsform eines Versteifungselements ist es vorgesehen, dass das Element über seine gesamte Länge hinweg als U-Profil ausgelegt ist, und der mittlere Abschnitt des Türschwellers durch wenigstens ein Schott verstärkt ist, das sich im Profilquerschnitt des Elements erstreckt. Die Fertigungskosten des Elements werden durch die zusätzlichen Schotts nur unwesentlich erhöht, sorgen aber - auch in Verbindung mit den schon genannten Ausführungsformen - für eine noch einmal erhöhte Stabilität des Elements.

Sowohl in der zweiten wie auch in der dritten Ausführungsform eines Versteifungselements kann es vorgesehen sein, dass der mittlere Abschnitt des Türschwellers durch eine erhöhte Dicke eines Versteifungselements verstärkt ist. Auch dadurch wird die Stabilität des Elements bei nur geringfügigen Fertigungsmehrkosten erhöht.

Bevorzugt ist das U-förmige Versteifungselement der zweiten und/oder dritten Ausführungsform an den freien Enden seines U-Profils an der Innenstruktur des Türschwellers gehalten. Dadurch entsteht eine in sich geschlossene - tunnelförmige - Versteifungsstruktur, die eine erheblich gesteigerte Stabilität gegen einwirkende Seitenkräfte aufweist. Dies gilt insbesondere dann, wenn zwei U-förmige Versteifungselemente beidseitig eines vorstehend schon beschriebenen Steges angebracht sind, wodurch ein Doppeltunnel entsteht.

In einer vierten Ausführungsform ist es schließlich vorgesehen, dass ein Versteifungselement wenigstens ein Schott umfasst, durch das der mittlere Abschnitt der Türschweller verstärkt ist und das sich im Profilquerschnitt des Türschwellers erstreckt. Ein solches Versteifungselement stellt eine fertigungstechnisch besonders einfache und kostengünstige Alternative zu den vorstehenden Ausführungsformen und gleichzeitig eine hinreichend stabile Unterstützung des Schwellers im mittleren Abschnitt dar.

Das Versteifungselement kann auch als Kunststoffeinleger ausgeführt sein, durch den der mittlere Abschnitt des Schwellers - ähnlich dem vorgenannten Schott - verstärkt ist. Da der Kunststoffeinleger im Vergleich zu einem Blech eine größere Breite aufweisen kann, ohne ein Gesamtgewicht des Schwellers deutlich zu erhöhen, müsste dieser auch nicht notwendigerweise fest mit einer Innenstruktur des Schwellers verbunden, sondern könnte auch nur darin eingelegt und über formschlüssigen Kontakt an einer Position darin gehalten sein. Ein solcher Kunststoffeinleger als Versteifungselement ist damit fertigungstechnisch besonders kostengünstig.

In allen bislang geschilderten Ausführungsformen ist es von Vorteil, wenn die Versteifungselemente identische Querschnitte aufweisen. Dadurch entsteht eine zusätzliche Kostenersparnis bei der Verwendung mehrerer gleichartiger oder unterschiedlicher Versteifungselemente in einem Türschweller, insbesondere bei Anbringung an einem schon beschriebenen Steg.

Bevorzugt ist es, wenn die Versteifungselemente mit einem Press- und/oder Walzprofil versehen sind, da sich diese Profile besonders einfach herstellen lassen. Dabei kann auch ein besonderer Zuschnitt im Sinne eines Tailored Blank oder Tailored Rolled Blank Profils vorgenommen werden.

Die Erfindung wird im Folgenden anhand von vier konkreten Ausführungsbeispielen alternativer Versteifungskonzepte näher erläutert, wobei auf die zugehörigen Zeichnungen Bezug genommen wird. Gleiche oder gleichwirkende Teile sind mit gleichen Bezugsziffern versehen. Es zeigen:
- Figur 1a: einen Bodenbereich der Karosserie eines Kraftfahrzeugs vor einem Side-Pole-Crash, in deren Schwellern Versteifungselemente entsprechend einer ersten Ausführungsform aufgenommen sind;
- Figur 1b: die Ansicht der Figur 1a nach dem Side-Pole-Crash;
- Figur 1c: verschiedenen Ansichten der Versteifungselemente der Figuren 1a und 1b zum Verdeutlichen des Verstärkungskonzepts;
- Figur 2a: eine Seitenansicht der Karosserie des Fahrzeugs der Figuren 1a bis 1c, mit Messknoten im Bereich einer B-Säule und einer Vordertür, deren Querverschiebung im Verlauf des Crashs bestimmt wird;
- Figur 2b: den zeitlichen Verlauf der Querverschiebungen der Messknoten an der B-Säule;
- Figur 2c: den zeitlichen Verlauf der Querverschiebungen der Messknoten an der Vordertür;
- Figur 3a: verschiedene Querschnitte des Schwellers der Figuren 1a bis 1c mit Versteifungselementen entsprechend der ersten Ausführungsform;
- Figur 3b: verschiedene Querschnitte des Schwellers der Figur 3a mit Versteifungselementen entsprechend einer zweiten Ausführungsform;
- Figur 3c: verschiedene Querschnitte des Schwellers der Figuren 1a und 1b mit Versteifungselementen entsprechend einer dritten Ausführungsform, und
- Figur 3d: verschiedene Querschnitte des Schwellers der Figuren 1a bis 1c mit Versteifungselementen entsprechend einer vierten Ausführungsform.

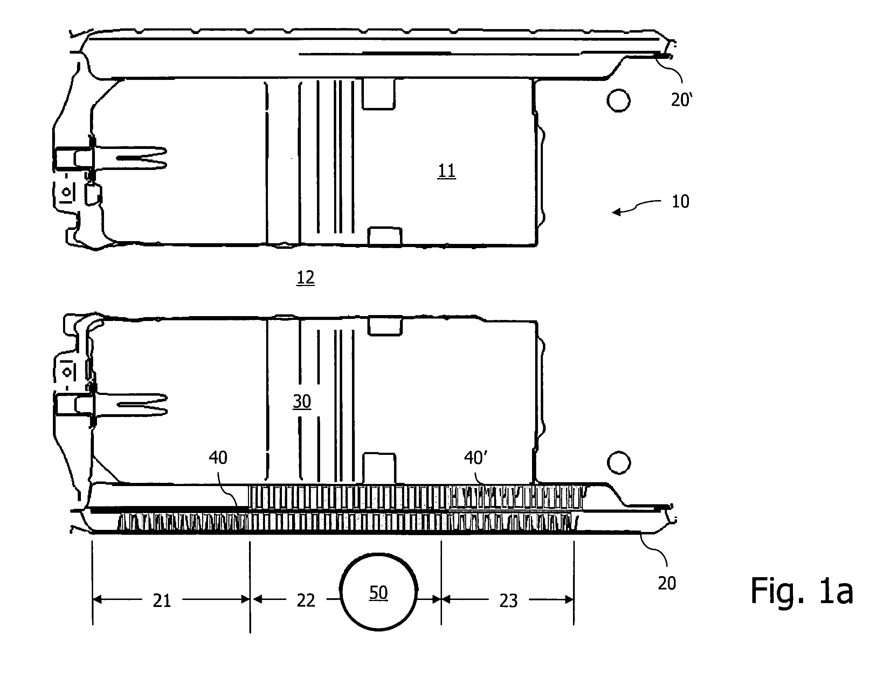

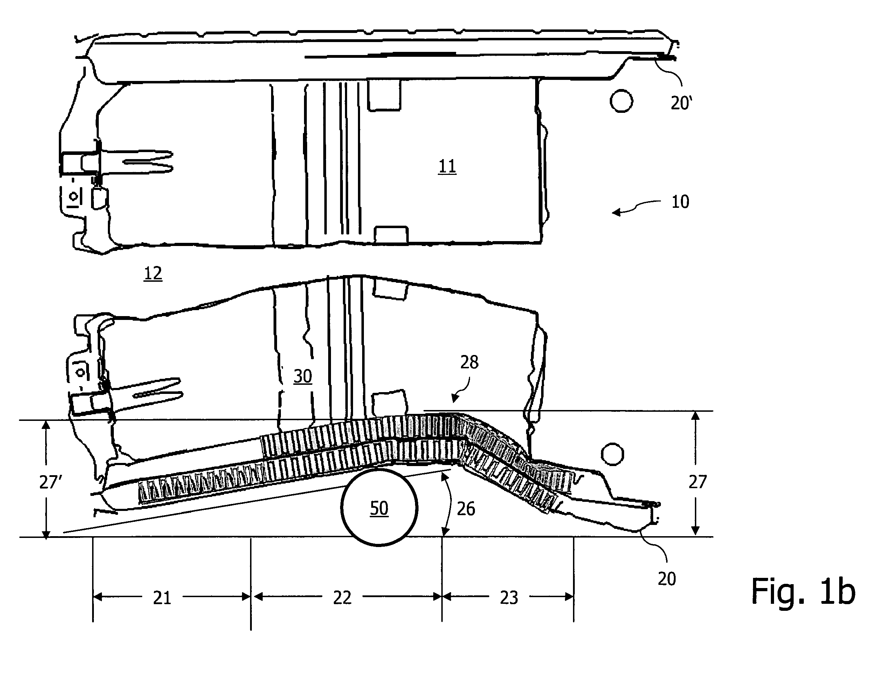

Das Versteifungskonzept der Figuren 1a und 1b wird im Folgenden allein an dem längsseits geschnittenen Schweller 20 erläutert, ist aber in dem Schweller 20' spiegelbildlich verwirklicht.

Die Figur 1a zeigt einen Bodenbereich 11 der Karosserie 10 eines Kraftfahrzeugs vor einem Side-Pole-Crash, in deren Schweller 20 Versteifungselemente 40, 40' entsprechend einer ersten Ausführungsform aufgenommen sind. Die Versteifungselemente 40, 40' weisen über ihre Länge hinweg Verprägungen auf, welche eine erhöhte Quersteifigkeit des Schwellers 20 gegen das Eindringen einer Barriere 50 bewirken. Aus Gewichtsgründen verläuft im vorderen Abschnitt 21 des Schwellers 20 nur das Versteifungselement 40, während im mittleren und hinteren Abschnitt 22 und 23 eine Verstärkung durch beide Elemente 40, 40' vorgesehen ist. Die Materialstärke der Elemente 40, 40' ist im mittleren Abschnitt 22 deutlich höher gewählt als in den beidseitig davon liegenden Abschnitten 22 und 23, womit der Schweller 20 im mittleren Abschnitt 22 eine erheblich erhöhte Steifigkeit aufweist. Dieser Abschnitt verläuft zudem angrenzend an eine Querversteifung 30, die sich zwischen einem Fahrzeugtunnel 12 und dem Schweller 20 im Bodenbereich 11 der Karosserie 10 erstreckt. Die Funktion des beschriebenen Versteifungskonzepts soll nun anhand der Figur 1b erläutert werden.

Die Figur 1b zeigt die Ansicht der Figur 1a nach einem Side-Pole-Crash. Die beschriebene Steifigkeitsverteilung des Schwellers 20 bewirkt, dass dessen vorderer und mittlerer Abschnitt 21 und 22 beim Eindringen der Barriere 50 im Wesentlichen unverformt bleiben, dh nicht wie üblich knicken, sondern eine Rotationsbewegung in einem Winkel 26 um das vordere Ende des Schwellers 20 ausführen. Die Energie der eindringenden Barriere 50 wird dagegen maßgeblich durch Deformation des hinteren Abschnitts 23 des Schwellers abgebaut, wobei der Schweller 20 eine Versagensstelle 28 im Bereich einer Hintertür aufweist. Das Rotationsverhalten des Schwellers 20 bewirkt insgesamt, dass die maximalen Deformationen an Hinter- und Vordertür 27 und 27' derart begrenzt werden, dass die geforderten Grenzwerte des Side-Pole-Tests eingehalten werden. Diese werden vorliegend noch dadurch unterschritten, weil sich der - über die Versteifungselemente 40, 40' materialverstärkte - mittlere Abschnitt des Schwellers 20 an der Querversteifung 30 (und darüber dem Fahrzeugtunnel 12) abstützt, welche beide deformiert werden und zum Energieabbau beitragen.

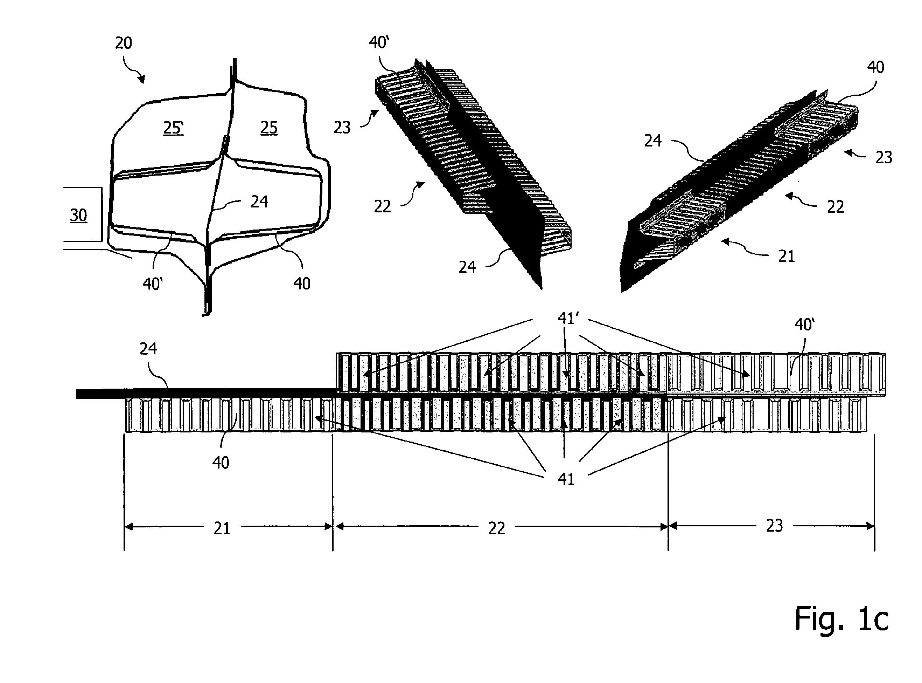

Die Figur 1c zeigt verschiedene Ansichten der Versteifungselemente 40, 40' der Figuren 1a und 1b zum Verdeutlichen des Verstärkungskonzepts. Die untere Teilfigur zeigt die aus den vorstehenden Figuren bekannte Draufsicht auf die Elemente 40, 40' und ihre Anordnung in den Abschnitten 21, 22 und 23 des Schwellers 20. Die Verprägungen 41, 41' weisen die Form von quer zur Fahrzeuglängsrichtung verlaufenden, kastenförmigen Wellen auf, welche seitlich einwirkenden Kräften ein erhöhtes Flächenmoment entgegensetzen. Im mittleren Abschnitt 22 sind die beide Elemente 40, 40' mit einer höheren Materialstärke versehen als in den Außenabschnitten.

Da die Versteifungselemente 40, 40' als U-Profil angelegt sind, wie aus den beiden oberen rechten Teilfiguren hervorgeht, können die Verprägungen an beiden Schenkeln des Profils angebracht werden, womit die Steifigkeit eines Elements 40, 40' erheblich erhöht wird. Beide Elemente 40, 40' sind mit den offenen Seiten ihres Profils einander zugewandt beidseitig an einem Steg 24 befestigt und bilden mit diesem und jedes für sich eine stabile Tunnelkonstruktion, welche die Steifigkeit weiter erhöht.

Die obere linke Teilfigur zeigt eine Querschnittsansicht des Schwellers 20 mit einer angrenzenden Querversteifung 30, wobei die Lage des schon erwähnten Stegs 24 zwischen einer rechten und linken Hälfte des Schwellers 20 ersichtlich ist. Der Schweller 20 wird dabei durch den Steg 24 in zwei etwa gleich bemessene, längsseitige Tunnel 25, 25' geteilt, was diesen zusätzlich verstärkt. Beidseitig an dem Steg 24 sind die U-förmigen Versteifungselemente 40, 40' angesetzt, so dass diese mit dem Steg 24 einen jeweils geschlossenen Tunnel bilden, was die Steifigkeit des Schwellers 20 weiter erhöht. Der Steg 24 mit den daran befestigten Versteifungselementen 40, 40' kann dabei als vormontierte Baugruppe gefertigt werden, die beim Aufbau des Schwellers 20 zwischen dessen Halbschalen eingefügt wird. Dies bedeutet einen nur geringfügigen Fertigungsmehraufwand im Karosseriebau.

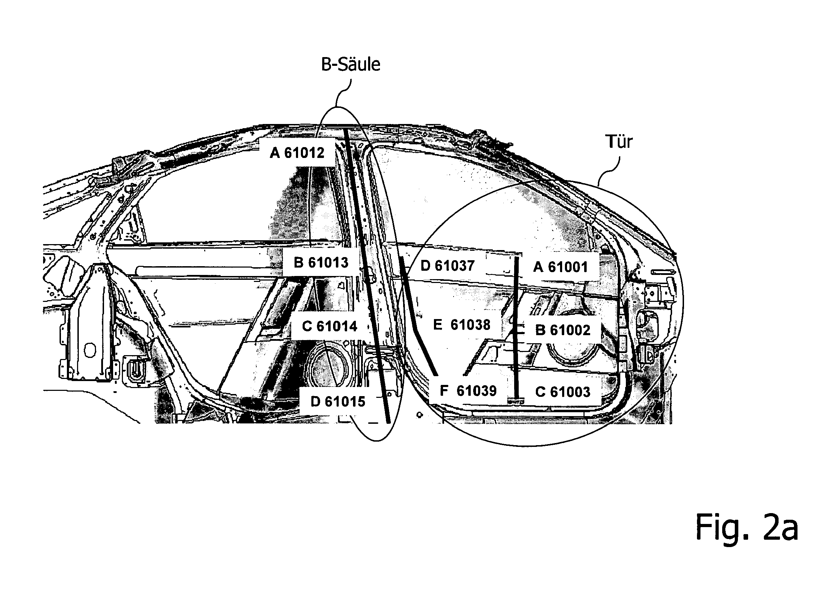

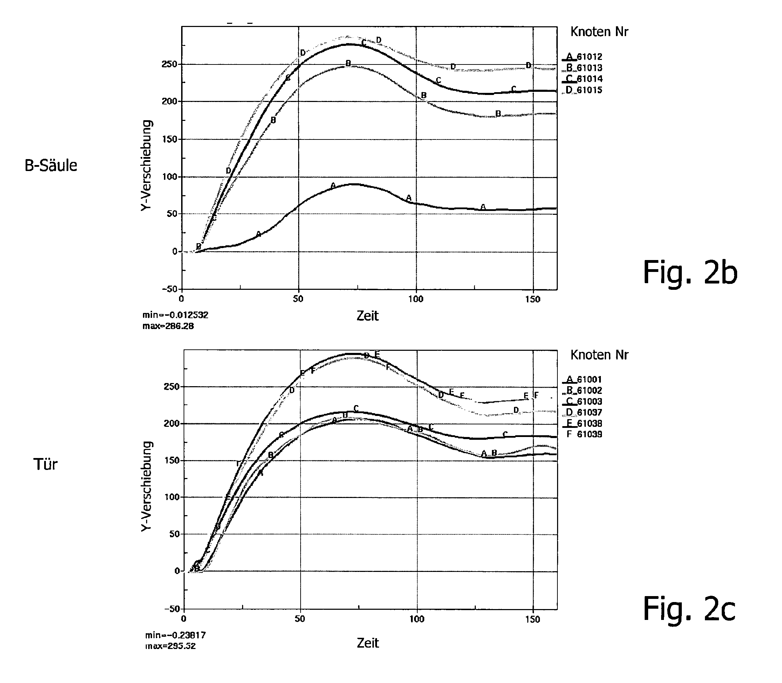

Die Figur 2a zeigt eine Seitenansicht der Karosserie 10 des Fahrzeugs der Figuren 1a bis 1c, mit Messknoten im Bereich einer B-Säule (A61012 ... D61015) und einer Vordertür (A61001 ... F61039), deren Querverschiebung im Verlauf des Crashs bestimmt wird. Die Querverschiebung dieser Knoten ist in den Diagrammen der Figuren 2b und 2c dargestellt.

Die Figur 2b zeigt den zeitlichen Verlauf der Querverschiebungen (Y-Verschiebung) der genannten Messknoten an der B-Säule, die Figur 2c den an der Vordertür. Dabei liegen die Intrusionen an der Vordertür sogar noch niedriger als in der B-Säule und kaum über 200 mm statisch, unter 300 mm dynamisch. Damit werden die zulässigen Grenzwerte des Side-Pole-Tests eingehalten.

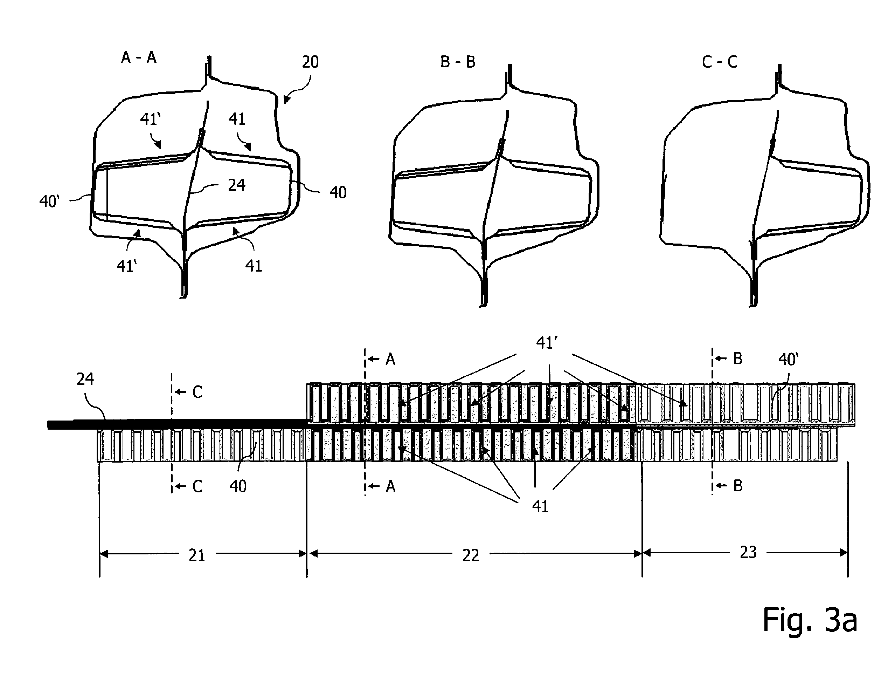

In den folgenden Figuren 3a bis 3d werden vier alternative Versteifungskonzepte eines Schwellers 20 vorgestellt.

Die Figur 3a zeigt verschiedene Querschnitte des Schwellers 20 mit Versteifungselementen 40, 40' entsprechend der schon beschriebenen ersten Ausführungsform, die als untere Teilfigur in einer Draufsicht gezeigt ist. Der Aufbau und die Lage der Elemente 40, 40' in den Abschnitten 21, 22 und 23 sind noch einmal in den Schnitten A-A, B-B und C-C der oberen Teilfiguren gezeigt. Im Schnitt A-A sind insbesondere die wellenförmigen Verprägungen 41, 41' zu erkennen, die zusammen mit dem U-förmigen Profil der Elemente 40, 40' und dessen beidseitiger Befestigung an dem Steg 24 für eine Verstärkung des Schwellers gegen seitlich einwirkende Kräfte bilden. Der mittlere Abschnitt 22 beider Elemente 40, 40' ist durch eine höhere Wandstärke der Elemente 40, 40' besonders steif ausgelegt, um eine Rotation des Schwellers 20 im Side-Pole-Test zu gewährleisten. Diese erste Ausführungsform der Versteifung stellt eine besonders einfache und effiziente Verstärkung des Schwellers 20 dar.

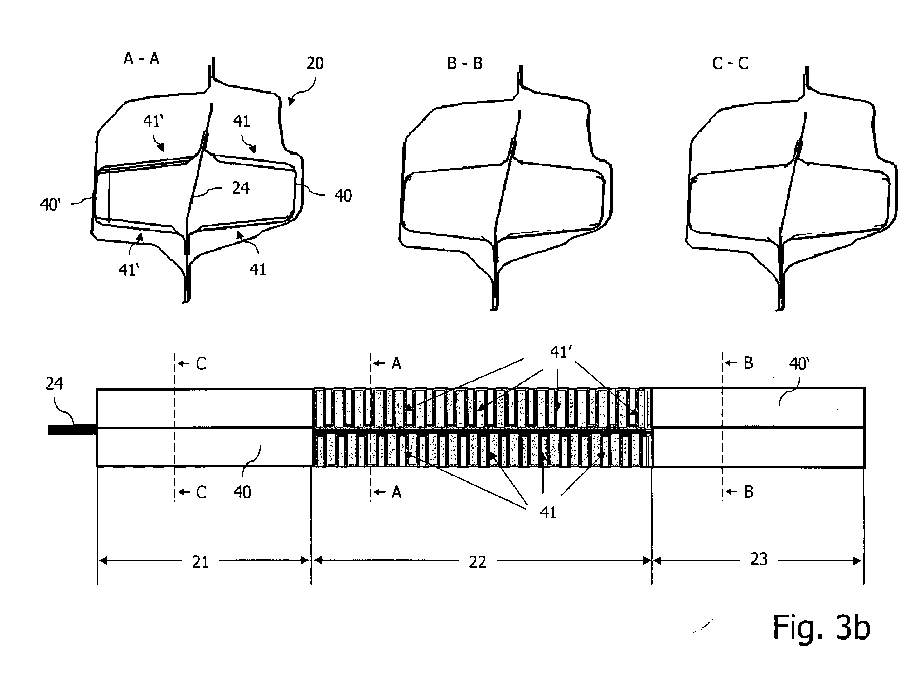

Die Figur 3b zeigt verschiedene Querschnitte des Schwellers 20 mit Versteifungselementen 40, 40' entsprechend einer zweiten Ausführungsform, die als untere Teilfigur in Draufsicht gezeigt ist. Zwar weisen die Elemente 40, 40' wie in Figur 3a einen U-förmigen Querschnitt auf. Dieser ist auch mit entsprechend wellenförmigen Verprägungen 41, 41' im mittleren Abschnitt 22 versehen, der gleich wie in Figur 3a materialverstärkt ausgeführt ist. Allerdings sind beide Elemente 40, 40' über alle Abschnitte 21, 22 und 23 hinweg geführt, was die Steifigkeit des Schwellers 20 im vorderen Abschnitt 21 erhöht. Dadurch kann in diesem Abschnitt auf eine Verprägung ganz verzichtet werden, ohne dass der Rotationseffekt des Schwellers im Side-Pole-Test vermindert wird, dh dieser im Abschnitt 21 und 22 knickt. Gleichzeitig wurde die Deformationszone im Abschnitt 23 weicher gestaltet, dh dort wurden ebenfalls keine Verprägungen 41, 41' vorgesehen, wodurch eine fertigungstechnisch einfache und günstige Lösung entsteht. Die Schnitte A-A, B-B und C-C der oberen Teilfiguren zeigen noch einmal den Aufbau und die Lage der Versteifungselemente 40, 40' an dem Steg 24 in den Abschnitten 21, 22 und 23.

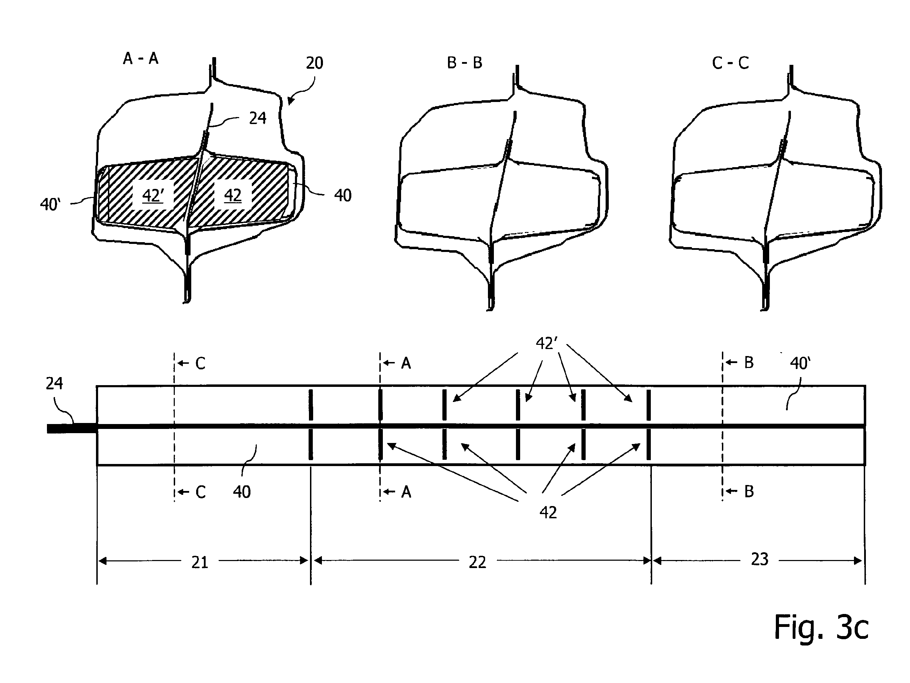

Die Figur 3c zeigt verschiedene Querschnitte des Schwellers 20 mit Versteifungselementen 40, 40' entsprechend einer dritten Ausführungsform, die wiederum als untere Teilfigur in einer Draufsicht gezeigt ist. Die Elemente 40, 40' sind wie in Figuren 3a und 3b als U-Profil gestaltet und über alle Abschnitte 21, 22 und 23 hinweg geführt. Auf Verprägungen wurde allerdings ganz verzichtet, wodurch eine fertigungstechnisch noch einfachere Lösung als in Figur 3b entsteht. Die geforderte Steifigkeit des Schwellers 20 im mittleren Bereich 22 wird in dieser dritten Ausführungsform jedoch nicht über eine erhöhte Materialstärke des Elemente 40, 40' bewirkt, sondern durch das Einbringen von Schotts 42, 42' in deren U-Profil. Dies wird im Schnitt A-A der oberen linken Teilfigur noch einmal verdeutlicht, welche die Erstreckung der Schotts 42, 42' im Querschnitt der Versteifungselemente 40, 40' zeigt. Auch diese Lösung lässt den Schweller 20 erfindungsgemäß rotieren, ohne dass die Grenzwerte des Side-Pole-Tests überschritten werden. Gleichzeitig ist diese fertigungstechnisch äußerst einfach herzustellen, da ein Walz- oder Pressvorgang zum Erzeugen der Verprägungen wie in den Figuren 3a und 3b entfällt.

Aus fertigungstechnischer Sicht sind die Versteifungselemente 40, 40' der Figuren 3a bis 3c sowohl als Walz- als auch als Pressteile herstellbar, als Tailored Blank oder als Tailored Rolled Blank. Damit sind grundsätzlich keine Fertigungsverfahren von Nöten, die speziell angepasste Werkzeuge oder Vorgehensweisen erfordern, was einen Kostenvorteil bedeutet.

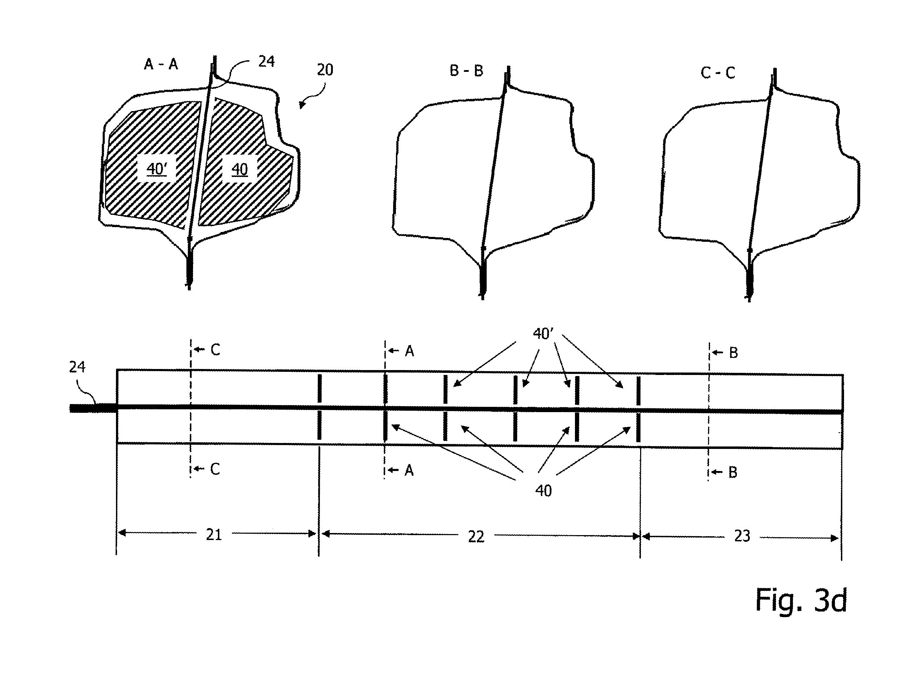

Die Figur 3d schließlich zeigt verschiedene Querschnitte des Schwellers 20 mit Versteifungselementen 40, 40' entsprechend einer vierten Ausführungsform. Dabei wird, im Gegensatz zu den vorstehenden Ausführungsformen, ganz auf längslaufende Versteifungselemente verzichtet. Die Versteifungselemente 40, 40' werden allein durch Schotts im mittleren Abschnitt 21 des Schwellers 20 gebildet, welche den Schweller 20 in diesem Bereich derart versteifen, dass dieser sich unter seitlicher Einwirkung einer Barriere nicht verformt, sondern erfindungsgemäß rotiert. Die Erstreckung der Versteifungselemente 40, 40' im Querschnitt des Schwellers ist im Schnitt A-A der oberen linken Teilfigur gezeigt, während die weiteren Schnitte B-B und C-C eine Verstärkung des Schwellers allein durch den Steg 24 zeigen. Die Ausführungsform der Elemente 40, 40' lässt eine noch einfachere fertigungstechnische Realisierung als in allen vorstehend beschriebenen Figuren zu, da die Schotts auch als verschieden breite Kunststoffeinleger herstellbar sind und zB nur formschlüssig in dem Schweller gehalten werden müssen.

Es sei darauf hingewiesen, dass sich die Versteifungselemente 40, 40' der hier vorgestellten Alternativen in unterschiedlichster Form in einem Schweller miteinander kombinieren lassen, wobei jede Kombination im Schweller, jede Art der Befestigung und jede genaue Lage der Abschnitte darin abhängig von dem spezifischen Anwendungsfall wählbar ist. Entscheidend ist der erfindungsgemäße Gedanke einer im Wesentlichen knickfreien, dh rotierenden Verformung des Schwellers zum Reduzieren der Intrusion einer seitlichen Barriere. Dazu sollte der vordere und der hintere Abschnitt des Schwellers deutlich weicher sein als dessen mittlerer Abschnitt. Damit stellt die Erfindung eine effiziente, einfach aufgebaute und gewichtsmäßig leichte, zudem flexibel anpassbare sowie kostengünstige Verstärkung eines Schwellers unter den Anforderungen des Side-Pole-Tests dar.

### Bezugszeichenliste

- 10: Karosserie
- 11: Bodenbereich der Karosserie 10
- 12: Fahrzeugtunnel
- 20: Linker Türschweller der Karosserie 10
- 20': Rechter Türschweller der Karosserie 10
- 21: Vorderer Abschnitt des Schwellers 20
- 22: Mittlerer Abschnitt des Schwellers 20
- 23: Hinterer Abschnitt des Schwellers 20
- 24: Steg des Schwellers 20
- 25: Außentunnel des Schwellers 20
- 25': Innentunnel des Schwellers 20
- 26: Rotationswinkel des Schwellers 20 nach dem Crash
- 27: Maximale Deformation in der Hintertür
- 27': Maximale Deformation in der Vordertür
- 28: Versagensstelle im Schweller 20
- 30: Querversteifung der Karosserie 10
- 40, 40': Versteifungselemente des Schwellers 20
- 41, 41': Verprägungen der Versteifungselemente 40, 40'
- 42, 42': Schotts der Versteifungselemente 40, 40'
- 50: Barriere für Side Pole Crash

## Patentansprüche

1. Kraftfahrzeug mit wenigstens einem längsseitig an seiner Karosserie (10) verlaufenden, verstärkten Türschweller (20, 20'), **dadurch gekennzeichnet, dass** der Schweller (20, 20') über seine Länge hinweg Abschnitte (21, 22, 23) unterschiedlicher Steifigkeit aufweist, die in einem vorderen und hinteren Abschnitt (21, 23) des Schwellers (20, 20') niedriger ist als in einem mittleren Abschnitt (22) des Schwellers (20, 20').

2. Kraftfahrzeug nach Anspruch 1, bei dem der mittlere Abschnitt (22) des Türschwellers (20, 20') angrenzend zu einer Querversteifung (30) der Karosserie (10) gebildet ist, die sich in deren Bodenbereich (11) erstreckt.

3. Kraftfahrzeug nach einem der Ansprüche 1 oder 2, bei dem der Türschweller (20, 20') wenigstens ein Versteifungselement (40, 40') aufnimmt, das mit einer Innenstruktur der Schweller (20, 20') gehalten ist.

4. Kraftfahrzeug nach Anspruch 3, bei dem die Innenstruktur des Türschwellers (20, 20') von einem Steg (24) gebildet ist, der den Schweller (20, 20') in einen längsgerichteten Innen- und Außentunnel (25, 25') teilt.

5. Kraftfahrzeug nach Anspruch 4, bei dem der Steg (24) vertikal im Querschnitt des Türschwellers (20, 20') ausgerichtet ist.

6. Kraftfahrzeug nach einem der Ansprüche 3 oder 4, bei dem ein Versteifungselement (40, 40') über seine gesamte Länge hinweg Verprägungen (41, 41') aufweist, und der mittlere Abschnitt (22) des Türschwellers (20, 20') durch eine erhöhte Dicke des Elements (40, 40') verstärkt ist.

7. Kraftfahrzeug nach einem der Ansprüche 3 bis 6, bei dem ein Versteifungselement (40, 40') über seine gesamte Länge hinweg als U-Profil ausgelegt ist, und der mittlere Abschnitt (22) des Türschwellers (20, 20') durch zusätzliche Verprägungen (41, 41') des Elements (40, 40') verstärkt ist.

8. Kraftfahrzeug nach einem der Ansprüche 5 oder 7, bei dem die Verprägungen (41, 41') an einem Versteifungselement (40, 40') quer zur Fahrzeuglängsachse verlaufende Wellen bilden.

9. Kraftfahrzeug nach einem der Ansprüche 3 bis 8, bei dem ein Versteifungselement (40, 40') über seine gesamte Länge hinweg als U-Profil ausgelegt ist, und der mittlere Abschnitt (22) des Türschwellers (20, 20') durch wenigstens ein Schott (42, 42') verstärkt ist, das sich Profilquerschnitt des Elements (40, 40') erstreckt.

10. Kraftfahrzeug nach einem der Ansprüche 7 bis 9, bei dem der mittlere Abschnitt (22) des Türschwellers (20, 20') durch eine erhöhte Dicke eines Versteifungselements (40, 40') verstärkt ist.

11. Kraftfahrzeug nach einem der Ansprüche 7 bis 10, bei dem ein Versteifungselement (40, 40') an den freien Enden seines U-Profils an der Innenstruktur des Türschwellers (20, 20') gehalten ist.

12. Kraftfahrzeug nach einem der Ansprüche 3 oder 4, bei dem ein Versteifungselement (40, 40') wenigstens ein Schott umfasst, durch das der mittlere Abschnitt (22) der Türschweller (20, 20') verstärkt ist und das sich im Profilquerschnitt des Türschwellers (20, 20') erstreckt.

13. Kraftfahrzeug nach einem der Ansprüche 3 oder 4, bei dem ein Versteifungselement (40, 40') wenigstens einen Kunststoffeinleger umfasst, durch den der mittlere Abschnitt (22) des Schwellers (20, 20') verstärkt ist.

14. Kraftfahrzeug nach einem der Ansprüche 3 bis 13, bei dem die Versteifungselemente (40, 40') identische Querschnitte aufweisen.

15. Kraftfahrzeug nach einem der Ansprüche 3 bis 14, bei dem die Versteifungselemente (40, 40') mit einem Press- und/oder Walzprofil versehen sind.
